# EUROPÄISCHE PATENTANMELDUNG

(11) **EP 1 768 238 A1**
(43) Veröffentlichungstag der Anmeldung: **28.03.2007**
(21) Anmeldenummer: 06117463.7
(22) Anmeldetag: 19.07.2006
(51) Int. Cl.: H02M 1/00, H02P 29/02

(54) **Verfahren zur Begrenzung der Temperatur einer Endstufe eines Elektromotors**

(30) Priorität: 24.09.2005 DE 102005045715
(71) Anmelder: ZF-Lenksysteme GmbH, 73527 Schwäbisch Gmünd (DE)
(72) Erfinder: Heilig, Arnulf, 73529, Schwäbisch Gmünd (DE); Bischofberger, Michael, 75233, Tiefenbronn (DE)

(57) **Zusammenfassung**

Verfahren zur Begrenzung der Temperatur einer Endstufe eines Elektromotors Bei einem Verfahren zur Begrenzung der Temperatur einer Endstufe (6) eines Elektromotors (1), insbesondere für die Lenkunterstützung bei einer elektrischen Hilfskraftlenkung, wird die Temperatur von wenigstens einem in der Endstufe (6) enthaltenen Brückenbauteil (3,4,5) dadurch ermittelt, dass der durch das Brückenbauteil (3,4,5) fließende Phasenstrom (I₃,I₄,I₅) gemessen, aus dem Phasenstrom (I₃,I₄,I₅) die Verlustleistung des Brückenbauteils (3,4,5) berechnet, aus der Verlustleistung die sich an dem Brückenbauteil (3,4,5) ergebende Temperaturerhöhung ermittelt und zu der Temperaturerhöhung die Temperatur einer Grundplatte (7) der Endstufe (6) addiert wird, und dass, wenn die ermittelte Temperatur des Brückenbauteils (3,4,5) eine bestimmte Maximaltemperatur (14) überschreitet, das Abgabemoment des Elektromotors (1) reduziert wird.

## Beschreibung

Die Erfindung betrifft ein Verfahren zur Begrenzung der Temperatur einer Endstufe eines Elektromotors nach der im Oberbegriff von Anspruch 1 näher definierten Art.

In elektrischen Hilfskraftlenkungen eingesetzte Elektromotoren sind aufgrund der häufig wechselnden und mit sehr unterschiedlichen Lenkgeschwindigkeiten stattfindenden Lenkbewegungen teilweise hohen Temperaturbelastungen ausgesetzt. Insbesondere wenn bei niedriger Fahrgeschwindigkeit Lenkvorgänge häufig wiederholt werden, kann es aufgrund der relativ hohen erforderlichen Lenkunterstützung zu Überhitzungen von Teilen der Endstufe des Elektromotors kommen. Kritisch ist dies insbesondere dann, wenn sich die Lenkung im Bereich eines ihrer Endanschläge befindet.

Gemäß einem allgemein bekannten Stand der Technik erfolgt der thermische Endstufenschutz mit Hilfe eines auf der Grundplatte der Endstufe angebrachten Temperatursensors. Ab einer bestimmten Temperatur wird dabei das Abgabemoment des Elektromotors reduziert, um eine Überhitzung der Endstufe zu verhindern. Die Temperatur der Endstufengrundplatte stellt jedoch nur einen sehr groben Richtwert für die Temperatur der am meisten betroffenen Bauteile der Endstufe, nämlich der Feldeffekttransistoren (FETs) dar, so dass diese entweder eine zu hohe Temperatur erreichen und dadurch beschädigt werden können oder das Abgabemoment des Elektromotors zu stark reduziert wird, was wiederum zu Lasten des Lenkkomforts geht, da hierdurch die Lenkunterstützung verringert wird.

Aus der DE 101 15 480 A1 ist ein Schutzgerät für eine mit einem Elektromotor ausgestattete elektrische Lenkservoeinrichtung bekannt, bei welchem eine Steuerschaltung und/oder der Elektromotor dadurch gegen eine Überhitzung geschützt wird, dass ein Maximalwert des Versorgungsstroms unter einer ersten und einer zweiten Steuerbedingung und in Abhängigkeit von der Hysterese des Motorversorgungsstroms begrenzt wird. Hierbei handelt es sich jedoch um ein relativ aufwändiges Gerät, das nicht unbedingt für den praktischen Einsatz geeignet ist.

Es ist daher Aufgabe der vorliegenden Erfindung, ein Verfahren zur Begrenzung der Temperatur einer Endstufe eines Elektromotors zu schaffen, welches mit möglichst einfachen Mitteln einen thermischen Schutz der Endstufe ermöglicht, ohne dass das Abgabemoment des Elektromotors zu stark reduziert wird.

Erfindungsgemäß wird diese Aufgabe durch die in Anspruch 1 genannten Merkmale gelöst.

Durch die erfindungsgemäße Ermittlung der Temperatur des wenigstens einen in der Endstufe enthaltenen Brückenbauteils aus der Messung des durch dasselbe fließenden Stroms, der Berechnung der Verlustleistung und daraus wiederum der Temperaturerhöhung des Brückenbauteils ergibt sich eine Möglichkeit, die Temperatur des Brückenbauteils mit sehr geringem konstruktivem Aufwand festzustellen, ohne dass hierfür zusätzliche Sensoren oder ähnliches eingesetzt werden müssen. Es handelt sich demnach um ein Verfahren, das vorteilhafterweise nur einen sehr geringen Kostenaufwand erzeugt.

Wenn die Temperatur des Brückenbauteils feststeht, so kann dasselbe durch Reduzieren des Abgabemoments des Elektromotors erheblich besser vor Temperaturüberschreitungen geschützt werden, wodurch die Gefahr der Überhitzung der gesamten Endstufe erheblich verringert wird. Gleichzeitig verbessert sich jedoch auch die Verfügbarkeit der Endstufe und somit des Elektromotors, da rein zur Erhöhung der Betriebssicherheit bislang vorgenommene Einschränkungen des Betriebs der Endstufe mit dem erfindungsgemäßen Verfahren nicht mehr notwendig sind.

Bei der erfindungsgemäßen Reduktion des Abgabemoments des Elektromotors wird der den Elektromotor versorgende Strom auf einen bestimmten Maximalwert begrenzt, wobei es selbstverständlich möglich ist, auch einen noch niedrigeren Strom einzustellen, wenn eine entsprechend geringe Lenkunterstützung angefordert wird. Umgekehrt wird selbstverständlich die Begrenzung des Stroms beendet, wenn die berechnete Temperatur der Endstufe bzw. des entsprechenden Endstufenbauteils unter einen kritischen Wert gefallen ist.

Es hat sich als hinsichtlich der Zuverlässigkeit des erfindungsgemäßen Verfahrens als besonders sinnvoll herausgestellt, wenn stets die Temperatur von drei Brückenbauteilen ermittelt und das Abgabemoment des Elektromotors reduziert wird, sobald bei einem der Brückenbauteile eine überhöhte Temperatur festgestellt wird.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

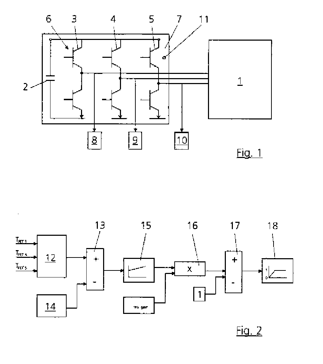

Es zeigt:
1. eine Endstufenschaltung eines Elektromotors, an dem das erfindungsgemäße Verfahren durchführbar ist; und
2. ein Blockschaltbild zur Begrenzung der Temperatur der Brückenbauteile von Fig. 1.

Fig. 1 zeigt eine Endstufenschaltung für einen Elektromotor 1, der zur Lenkunterstützung bei einer nicht dargestellten elektrischen Hilfskraftlenkung dient. Zwischen einer Spannungsquelle 2 und dem Elektromotor 1 sind in an sich bekannter Weise mehrere Brückenbauteile geschaltet, nämlich die nachfolgend der Einfachheit halber als FETs bezeichneten Feldeffektivtransistoren 3, 4 und 5. Die FETs 3, 4 und 5 sind Teil einer Endstufe 6 des Elektromotors 1, die neben weiteren, nicht dargestellten Bauteilen auch eine Grundplatte 7 aufweist. Insbesondere wenn bei niedrigen Geschwindigkeiten des Fahrzeugs, das mit der elektrischen Hilfskraftlenkung ausgestattet ist, häufige Lenkbewegungen stattfinden, sind hohe Lenkkräfte und damit eine hohe Lenkunterstützung notwendig. Dabei fließt durch die Endstufe 6 des Elektromotors 1 ein hoher Strom, wodurch es zu sehr hohen Temperaturen der Endstufe 6 und insbesondere der FETs 3, 4 und 5 kommen kann.

Um einen thermischen Schutz der FETs 3, 4 und 5 zu erreichen, wird zunächst, wie nachfolgend beschrieben, die aktuelle Temperatur derselben ermittelt. Hierzu wird der durch den jeweiligen FET 3, 4 und 5 fließende Phasenstrom I₃, I₄ und I₅ gemessen und über einen dem jeweiligen FET 3, 4 und 5 nachgeschalteten Widerstand 8, 9 und 10 die Verlustleistung des jeweiligen FET 3, 4 und 5 berechnet. Diese Verlustleistung ist ein Zwischenschritt bei der Berechnung der Temperatur des jeweiligen FET 3, 4 oder 5, da aus der Verlustleistung die sich an dem FET 3, 4 oder 5 ergebende Temperaturerhöhung ermittelt und zu dieser Temperaturerhöhung die Temperatur der Grundplatte 7 der Endstufe 6 addiert wird. Die Ermittlung der Temperatur des jeweiligen FET 3, 4 oder 5 erfolgt mittels eines Temperaturmodells, das bei der Entwicklung der Endstufe 6 ein Mal festgelegt werden muss und unter anderem die Wärmekapazität und verschiedene Wärmeübergänge der beteiligten Bauteile enthält. Als Eingang dient somit der Phasenstrom I₃, I₄ und I₅ und die Temperatur der Grundplatte 7 und es wird die Temperatur des jeweiligen FET 3, 4 oder 5 ausgegeben. Zur Messung der Temperatur der Grundplatte 7 dient im vorliegenden Fall ein an derselben angebrachter Temperatursensor 11. Selbstverständlich können auch mehrere Temperatursensoren zur Messung der Temperatur der Grundplatte 7 vorgesehen sein.

Fig. 2 zeigt eine Begrenzungsschaltung, mittels der die Temperatur eines der FETs 3, 4 oder 5 abgesenkt werden kann, wenn diese eine bestimmte Maximaltemperatur überschreitet. Die Begrenzungsschaltung weist ein erstes Bauteil 12 auf, welches dafür vorgesehen ist, zu ermitteln, welcher der FETs 3, 4 oder 5 die höchste Temperatur aufweist. Diese Temperatur wird dann in einem nachfolgenden Vergleicherbauteil 13 mit einer Soll- bzw. Maximaltemperatur 14 verglichen. Bei der Maximaltemperatur 14 handelt es sich um eine bestimmbare Größe, mit welcher die maximale thermische Belastung der FETs 3, 4 und 5 festgelegt wird. Die Maximaltemperatur 14 kann beispielsweise in einem Bereich zwischen 150 und 250°C liegen.

Dem Vergleicherbauteil 13 ist ein PI-Regler 15 nachgeschaltet, welcher, wenn die Maximaltemperatur 14 von einem der FETs 3, 4 oder 5 überschritten wird, den dem Elektromotor 1 zugeführten Strom und somit dessen Abgabemoment senkt. Der PI-Regler 15 gibt hierzu einen Reduzierungsfaktor 16 aus, der in einem weiteren Vergleicherbauteil 17 von dem Wert 1 abgezogen wird und damit die Reduzierung des in dem Diagramm 18 dargestellten Motorstroms darstellt. Da der den Elektromotor 1 versorgende Strom proportional zu dessen Abgabemoment ist, ergibt die Reduzierung des Motorstroms eine direkte Reduzierung des Abgabemoments des Elektromotors 1. Auf diese Weise ergeben sich niedrigere Ströme I₃, I₄ und I₅, welche durch die FETs 3, 4 und 5 fließen, so dass auf diese Weise auch die Temperaturen an den FETs 3, 4 und 5 reduziert werden. Wenn die Temperatur der Endstufe 6 bzw. sämtlicher FETs 3, 4 und 5 unter einen kritischen Wert gefallen ist, wird die Begrenzung des Stroms beendet.

Das vorliegende Ausführungsbeispiel bezieht sich auf einen Elektromotor 1 für eine Hilfskraftlenkung in einem Kraftfahrzeug. Prinzipiell ist das beschriebene Verfahren jedoch auch bei anderen Elektromotoren vorstellbar, bei denen während des Betriebs unterschiedliche Ströme vorliegen und sich damit eine unterschiedliche Aufheizung der Endstufenbauteile ergibt.

## Patentansprüche

1. Verfahren zur Begrenzung der Temperatur einer Endstufe eines Elektromotors, insbesondere für die Lenkunterstützung bei einer elektrischen Hilfskraftlenkung, **dadurch gekennzeichnet, dass** die Temperatur von wenigstens einem in der Endstufe (6) enthaltenen Brückenbauteil (3,4,5) **dadurch** ermittelt wird, dass der durch das Brückenbauteil (3,4,5) fließende Phasenstrom (I₃,I₄,I₅) gemessen, aus dem Phasenstrom (I₃,I₄,I₅) die Verlustleistung des Brückenbauteils (3,4,5) berechnet, aus der Verlustleistung die sich an dem Brückenbauteil (3,4,5) ergebende Temperaturerhöhung ermittelt und zu der Temperaturerhöhung die Temperatur einer Grundplatte (7) der Endstufe (6) addiert wird, und dass, wenn die ermittelte Temperatur des Brückenbauteils (3,4,5) eine bestimmte Maximaltemperatur (14) überschreitet, das Abgabemoment des Elektromotors (1) reduziert wird.

2. Verfahren nach Anspruch 1, **dadurch gekennzeichnet, dass** stets die Temperatur von drei Brückenbauteilen (3,4,5) ermittelt wird, und dass das Abgabemoment des Elektromotors (1) reduziert wird, sobald bei einem der Brückenbauteile (3,4,5) eine überhöhte Temperatur festgestellt wird.

3. Verfahren nach Anspruch 1 oder 2, **dadurch gekennzeichnet, dass** das Abgabemoment des Elektromotors (1) mittels eines PI-Reglers (15) reduziert wird.

4. Verfahren nach Anspruch 1, 2 oder 3, **dadurch gekennzeichnet, dass** die Temperatur der Grundplatte (7) der Endstufe (6) mittels wenigstens eines Temperatursensors (11) gemessen wird.

5. Verfahren nach einem der Ansprüche 1 bis 4, **dadurch gekennzeichnet, dass** die Maximaltemperatur (14) in einem Bereich zwischen 150 und 250°C liegt.
